# EUROPEAN PATENT APPLICATION

(11) **EP 1 689 157 A1**
(43) Date of publication of application: **09.08.2006**
(21) Application number: 04819468.2
(22) Date of filing: 29.11.2004
(51) Int. Cl.: H04M 11/00, H04L 12/56, H04Q 7/38

(54) **COMMUNICATION CONTROL DEVICE AND METHOD**

(30) Priority: 27.11.2003 JP 2003396882
(71) Applicant: MATSUSHITA ELECTRIC INDUSTRIAL CO., LTD., Kadoma-shi, Osaka 571-8501 (JP)
(72) Inventor: HIRAI, Junichi., c/o Matsushita Electric Industria, Osaka 571-8501 (JP); SUGIYAMA, Keiji., c/o Matsushita Electric Industri, Osaka 571-8501 (JP); TAKEMURA, Masashi., c/o Matsushita Electric Indust, Osaka 571-8501 (JP)
(74) Representative: Eisenführ, Speiser & Partner
(86) International application number: PCT/JP2004/017690
(87) International publication number: WO 2005/053298

(57) **Abstract**

People communicating with each other in remote places can easily connect their communication devices. For example, a user A of an IP telephone unit a1 may have a desire to transmit a still image to a user B talking on an IP telephone unit b1. In such a case, from the IP telephone unit b1, the IP telephone unit a1 obtains the facsimile number of a communication device belonging to user B which can receive still images, for example, a facsimile. The IP telephone unit a1 can transmit the obtained facsimile number to the facsimile device a2 connected by LAN. The facsimile device a2 which has received the number calls the received facsimile number. In other words, the IP telephone unit a1 which includes the communication control device obtains the communication address required for a third communication during a call, and notifies the communication device a2 of the address with the second communication function.

## Description

### TECHNICAL FIELD

The present invention relates to a communication device and a communication system that employs a network such as the Internet in order to provide a remote communication function to a user.

### BACKGROUND ART

Recently, more and more home electrical appliances used in everyday life, such as televisions, digital cameras, car navigation system, and the like, have a communication function utilizing the Internet or the like. It is thought that in the future, many home electrical devices used in everyday life will have a communication function utilizing the Internet or the like, and thus will allow one device to exchange various data such as images, audio, text, and the like with other designated devices. For example, it will be possible to transmit an image taken with one's digital camera to another designated device such as cell phone, car navigation system, or the like, via the Internet or the like to be displayed thereon, or transmit that image to a designated printer in order to be printed.

When data is to be transmitted from one device to another device over a network such as the Internet, it will be necessary to designate the address of the other device on the network. For example, in the case of the Internet, a set of numbers referred to as an IP address such as "192.168.0.1 ", or a series of characters called a domain name or a host name such as "hostname@domainname.co.jp" are often used. However, in general, many home electrical devices do not include an input interface suitable for text entry, e.g., a personal computer keyboard. Thus, the task of designating an address is often very cumbersome for users.

In one method which allows users to avoid inconvenient address designation operations and to easily connect devices, Patent Reference 1 discloses a method for obtaining the address of the other device by using a communication means, such as infrared communication and short-range wireless data communication, which can establish a connection without an address. According to a control method described in this reference, when a user issues a print instruction by using e-mail from a cell phone or the like to a printer located in a convenience store or the like, the user can obtain the e-mail address of the printer by means of infrared communication or the like by simply pressing a button in front of the printer. In this way, the user can send e-mail for print instructions to the printer without a cumbersome address input operation using a cell phone. However, in the control method described in this reference, the device to be connected must be close enough to allow infrared communication or short-range wireless data communication.
Patent Reference 1: JP-2002-132477-A A voice conversation via telephone is typically performed in order to communicate with another party in a remote location. Recently, text means such as e-mail, instant messaging, or the like is also often used by using equipment such as personal computers, cell phones, and the like. During communication using such means, people often have a desire to communicate with the same party but use different means. For example, during a conversation on the telephone, when a person happens to mention clothing which he/she purchased recently, that person may have a desire to take a video of oneself with one's video camera while wearing the new clothing, and then connect the camera to a television belonging to the other party with whom they are speaking in order to show the video. Alternatively, during a conversation on the telephone, people often decide where to meet each other. They may have a desire to take a photograph of a map showing the place to meet by using one's digital camera, and then send that photograph to a cell phone.

However, in order to perform these kinds of things, it is necessary to know the types of devices that the other party possesses, to determine which of the devices near the user will be connected to which of the other party's devices, and to check the address of the other party's device in order to input the address of that device into one's own device. Of course, it is possible to make a phone call and tell each other about the devices around them in order to determine the appropriate combination, and ask for the address of that device. However, this method is very cumbersome, and errors in the address often occur. Since the other party is in the remote location, the method of obtaining the address of the other party's device using infrared communication or short-range wireless data communication as described in Patent Reference 1 cannot be applied. Furthermore, when there are a number of devices around the user or the other party, it is difficult to know the capabilities of all those devices and then find the appropriate device.

An object of the present invention is to provide a technique for easily enhancing communication functions by allowing people communicating with each other in remote places to easily connect the appropriate devices around them.

### DISCLOSURE OF THE INVENTION

In order to solve the above-described problems, the present invention provides the following communication control device and method. In the following description, reference numerals a1, a2, b1, and b2 are used to differentiate four different communication devices. There is no intention to limit the communication devices to specific devices or to the communication device/communication control devices in the embodiments.

Invention 1 provides a communication control device for communicating with a communication device b1 with a first communication function and communicating with a communication device a2 with a second communication function. The device includes the following elements:
- a first attribute information storage unit for storing attribute information regarding a third communication function of the communication device a2;
- an accepting unit for accepting a request for communication from a user by means of a communication device having a communication function other than the first communication function and the second communication function;
- an attribute information transmission unit for transmitting attribute information regarding the communication device a2 stored in the first attribute information storage unit to the communication device b1 with the first communication function based on the request accepted by the accepting unit;
- an attribute information receiving unit for receiving attribute information that includes at least a communication address for a communication device b2 having the third communication function from the communication device b1 after the attribute information is transmitted by the attribute information transmission unit; and
- a first attribute notifying unit for notifying the communication device a2 with the second communication function of the communication address obtained by the attribute information receiving unit.

For example, user A of an IP telephone unit a1 (corresponding to a communication control device) may wish to transmit a still image to user B who is talking on an IP telephone unit b1 (first communication function). In such an example, the IP telephone unit a1 will obtain the communication address of a communication device b2 belonging to user B which can receive a still image, e.g.,, the facsimile number of a facsimile device, from the IP telephone unit b1. The IP telephone unit a1 will transmit the obtained facsimile number to a facsimile device (corresponding to a communication device a2) connected by LAN (corresponding to a second communication function). When the facsimile device (communication device a2) receives the facsimile number, it will call the number (third communication function). In other words, the IP telephone unit a1 having the communication control device will obtain the communication address necessary for the third communication function during a conversation, and notify the communication device a2 with the second communication function. In this way, users can use a plurality of communication devices simultaneously in order to perform various types of communication in a flexible manner.

Invention 2 provides a communication control device according to Invention 1, and further comprises a first attribute information obtaining unit for obtaining attribute information regarding the communication function other than the first communication function and the second communication function from at least one communication device with the second communication function. In the device, the first attribute information storage unit stores the attribute information obtained by the first attribute information obtaining unit.

The second communication function may be, for example, infrared communication, Bluetooth (registered trademark), wireless/wired LAN, USB and the like. This function allows the attribute information of the communication device to be retrieved from the communication device itself and stored in the first attribute information storage unit. Of course, the user can set the attribute information.

Invention 3 provides a communication control device according to Invention 1, wherein the first attribute information storage unit stores attribute information regarding the communication function other than the first communication function and the second communication function for each of a plurality of communication devices, and the device further comprises a first extraction unit for extracting at least one communication device, including the communication device a2, stored in the first attribute information storage unit as a candidate based on the attribute information. In the device, the attribute information transmission unit transmitted attribute information regarding the extracted candidates to the communication device b1 with the first communication function by means of the first extraction unit.

Since candidates for the plurality of communication devices are transmitted to the other party, the other party is able to select the communication device which fulfills the requirements. Thus, the variations in the combination of communication devices used by two parties will increase, and users can enjoy more convenience.

The first extraction unit may extract candidates from the stored communication devices based on some type of evaluation rules, or may receive a selection by the user. The evaluation rules may be, in descending order: 1) performance; 2) proximity to the user's current location; 3) proximity to the location where the user will move to; 4) match with the user state; 5) match with functions; 6) most recent usage, and the like. The first attribute information storage unit stores attribute information in accordance with the evaluation rules to be applied. In other words, performance such as resolution and communication speed, location information by means of GPS or the like, function, usage history, and the like are included in the attribute information.

Further, in accordance with the evaluation rules to be applied, it is preferable to operate a scheduler, or a user state control device for managing a schedule of the user with the communication control device. This allows precisely selecting candidates for the communication devices which are appropriate for the user based on various information.

Invention 4 provides the communication control of Invention 3, wherein the attribute information stored in the first attribute information storage unit includes function information regarding the functions of the communication devices. In the device, the accepting unit accepts the designation of one of the functions stored in the first attribute information storage unit, and the first extraction unit extracts the communication devices having the function accepted by the accepting unit as the candidates.

The user can select the communication device based on the function which is desired. This is convenient because a suitable type of communication can be readily started. The function may be, for example, still image input/output, motion picture input/output, or audio input/output.

Invention 5 provides the communication control device of Invention 3, wherein the attribute information receiving unit receives attribute information regarding at least one communication device having the communication function other than the first communication function and the second communication function, including the communication device b2, from the communication device b1. The device further comprises a first determining unit for determining an optimal combination of the communication devices based on the attribute information of the candidates extracted by means of the first extraction unit, and the attribute information received by the attribute information receiving unit. In the device, the first attribute notifying unit will provide a communication address in accordance with the determination by the first determining unit.

Both communication control devices that communicate with each other will respectively extract candidates from a plurality of communication devices and exchange their attribute information. Based on the attribute information, the combination which is good for both users who are communicating with each other can be determined. It is further preferable to exchange not only the attribute information but also the evaluation results for each of the candidates. By exchanging the evaluation results calculated with the evaluation rules of the communication control devices, combinations of the communication devices can be determined with the views of both communicating users taken into consideration.

Invention 6 provides the communication control device of Invention 5, wherein the first determining unit evaluates all of the combinations of the candidates extracted by the first extraction unit and the communication devices received by the attribute information receiving unit, receives the evaluation results from the communication device b1 at the communication device b1, and determines the optimal combination of communication devices based on the sum of both evaluation results.

Since both parties exchange the evaluation results, and the optimal combination is determined based on the sum of the evaluation results of both parties, inconsistencies in the determinations made can be avoided.

Invention 7 provides a communication control device for communicating with a communication device a1 with a first communication function. The device comprises the following elements:
- a second attribute information storage unit for storing attribute information that includes at least the communication address for a third communication function of a communication device b2 that is different from the communication device a1;
- a request receiving unit for receiving attribute information regarding a communication device a2 having the third communication function from the communication device a1; and
- a response transmission unit for transmitting the attribute information that includes at least the communication address of the communication device b2 which is stored in the second attribute information storage unit to the communication device a1 with the first communication function, in response to the reception of the attribute information by the request receiving unit.

Consider a situation in which a user B of an IP telephone unit b1 (corresponding to the communication control device of the present invention) is talking on the telephone (first communication function) with a user A of an IP telephone unit a1 (corresponding to the communication control device of Invention 1). The IP telephone unit b1 will receive attribute information from the IP telephone unit a1 that includes the facsimile number of a facsimile device (corresponding to the communication device a2) of the user A. Then, the IP telephone unit b1 will return the attribute information of the communication device b2 which can communicate with the facsimile device a2, based on the attribute information stored in the attribute information storage unit. Thus, communication by means of another communication function, such as facsimile, can be operated at the same time in addition to communication by means of the IP telephone unit (communication function A) between the users A and B.

Invention 8 provides the communication control device of Invention 7, in which the communication control device is connected to the third communication device b2 with the second communication function. The device further comprises a second attribute notifying unit for notifying the communication device b2 of the communication address of the communication device a2 which is received by the request receiving unit with the second communication function.

By transmitting the communication addresses to each other, communication between two users can be initiated which requires the communication addresses of both parties, e.g., IP communication.

Invention 9 provides the communication control device of Invention 7, in which the communication control device is connected to the third communication device b2 with the second communication function. The device further comprises a attribute information obtaining unit for obtaining attribute information on the communication function other than the first communication function and the second communication function from at least one communication device with the second communication function. In the device, the second attribute information storage unit stores the attribute information obtained by the attribute information obtaining unit.

The second communication function may be, for example, infrared communication, Bluetooth (registered trademark), wireless/wired LAN, USB, and the like. This function allows the attribute information of the communication device to be retrieved from the communication device itself and stored in the attribute information storage unit. Of course, the user can set the attribute information.

Invention 10 provides the communication control device according to Invention 7, wherein the second attribute information storage unit stores attribute information on the communication function other than the first communication function and the second communication function for each of a plurality of communication devices. In the device, the request receiving unit receives attribute information regarding the communication function other than the first communication function and the second communication function for at least one communication device, including the communication device a2. The device further comprises a second extraction unit for extracting at least one communication device candidate which has the communication function other than the first communication function and the second communication function, including the communication device b2, based on the attribute information of the communication device received by the request receiving unit. The response transmission unit transmits the attribute information of the candidates extracted by the second extraction unit to the communication device a1 with the first communication function.

By selecting one or more communication devices which match the communication device candidates selected by the other party and providing the attribute information thereto, it will be possible to determine only the combination of communication devices that is convenient for both parties.

Invention 11 provides the communication control device of Invention 10, and further comprises a second determining unit for determining the optimal combination of communication devices, based on the attribute information of the candidates extracted by the second extraction unit and the attribute information of the communication devices received by the request receiving unit.

Both communication control devices that communicate with each other will respectively extract a plurality of communication device candidates and exchange the attribute information of each. Based on the attribute information, the combination of the communication devices convenient for both users can be determined.

Invention 12 provides the communication control device according to Invention 11, wherein the second determining unit evaluates all of the combinations of candidates extracted by the second extraction unit and the communication devices received by the request receiving unit, receives the evaluation results at the communication device a1 from the communication device a1, and determines the optimal combination of communication devices based on the sum of both evaluation results.

Since both parties exchange the evaluation results and the optimal combination is determined based on the sum of the evaluation results of both, a combination of communication devices that is biased toward one party can be prevented. Further, inconsistencies in the determinations made by both parties can be avoided.

Invention 13 provides a communication control method executed by a communication control device for communicating with a communication device b1 with a first communication function, and communicating with a communication device a2 with a second communication function. The method comprises the following steps:
- a first attribute information storing step that stores attribute information regarding a third communication function of the communication device a2;
- an accepting step that accepts a request for communication from a user by means of a communication device having a communication function other than the first communication function and the second communication function;
- an attribute information transmission step that transmits attribute information regarding the communication device a2 stored in the first attribute information storing step to the communication device b1 with the first communication function, based on the request accepted in the accepting step;
- an attribute information receiving step that receives attribute information from the communication device b1 that includes at least the communication address for a communication device b2 having the third communication function, after the attribute information is transmitted in the attribute information transmission step; and
- a first attribute notifying step that notifies the communication device a2 of the communication address obtained in the attribute information receiving step with the second communication function.

The method is a method executed by the communication control device of Invention 1. The method has similar functions and effects as Invention 1.

Invention 14 provides a communication control method executed by a communication control device for communicating with a communication device a1 with a first communication function. The method comprising the following steps:
- a second attribute information storing step that stores attribute information that includes at least the communication address for a third communication function of a communication device b2 that is different from the communication device a1;
- a request receiving step that receives attribute information from the communication device a1 regarding a communication device a2 having the third communication function; and
- a response transmission step that transmits the attribute information, including at least the communication address of the communication device b2 which is stored in the second attribute information storing step, to the communication device a1 with the first communication function, in response to the reception of the attribute information in the request receiving step.

The method is executed by the communication control device of Invention 7. The method has similar functions and effects as Invention 1.

The present invention will be described with reference to the following embodiments and attached drawings. However, an object of the descriptions and the drawings is to illustrate embodiments of the present invention. There is no intention to limit the present invention to these examples.

### BRIEF DESCRIPTION OF THE DRAWINGS

[Fig. 1] A diagram showing an example of communication control devices and communication devices connected to each other according to Embodiment 1.
[Fig. 2] A function block diagram showing structures of the communication devices according to Embodiment 1.
[Fig. 3A] A schematic diagram of attribute information for a digital camera.
[Fig. 3B] A schematic diagram of attribute information for a scanner.
[Fig. 3C] A schematic diagram of attribute information for a television.
[Fig. 3D] A schematic diagram of attribute information for a printer.
[Fig. 3E] A schematic diagram of attribute information for an audio device.
[Fig. 4] A block diagram showing the function structure of a communication control device.
[Fig. 5] An example of a function selection screen.
[Fig. 6] An example of a selection screen for communication devices.
[Fig. 7A] A diagram illustrating attribute information stored in the communication device information storage section of the communication control device 101a.
[Fig. 7B] A diagram illustrating attribute information stored in the communication device information storage section of the communication control device 101b.
[Fig. 8] A flow diagram showing an exemplary flow of a communication requesting process performed by the communication control device.
[Fig. 9] A flow diagram showing an exemplary flow of the requested processes performed by the communication control device.

### BEST MODE FOR CARRYING OUT THE INVENTION

<Outline of the Invention>
For example, a user A of an IP telephone unit a1 (corresponding to a communication control device) may wish to transmit a still image to a user B of an IP telephone unit b1 (first communication function). In such an example, the IP telephone unit a1 will obtain the communication address of a communication device b2 belonging to user B which can receive a still image, e.g., the facsimile number of a facsimile device, from the IP telephone unit b1. The IP telephone unit a1 will transmit the obtained facsimile number to a facsimile device (corresponding to a communication device a2) connected by LAN (corresponding to a second communication function). When the facsimile device (communication device a2) receives the facsimile number, it will call the number (third communication function). In this way, users can use a plurality of communication devices simultaneously to have various types of communication in a flexible manner.

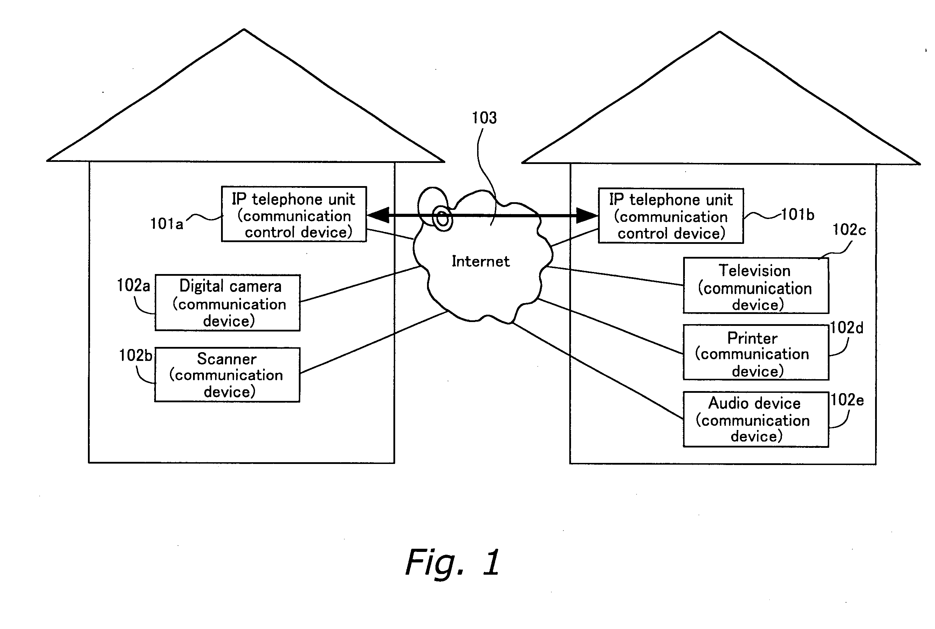

<Embodiment 1>
[Structure]
(1) Overall structure
   Figure 1 is a diagram showing an example of communication control devices and communication devices connected to each other according to the present invention. IP telephone units 101a and 101b are communication control devices according to the present embodiment. User A uses the IP telephone unit 101a, and user B uses the IP telephone unit 101b. They are respectively connected to the Internet. The IP telephone units 101a and 101b communicate by means of an IP telephone function.

In the present embodiment, IP telephone units are used as communication control devices 101. However, terminals having an e-mail function and/or instant messaging function may also be used as communication control devices. Alternatively, terminals having a general analog telephone function, ISDN, or cell phone function can be used as communication control devices. In other words, any type of device can be used as a communication control device as long as both users have it and can know the addresses of each other beforehand so that they can easily establish communication.

The IP telephone units 101a and 101b as the communication control devices respectively have an external communication function, and communication devices can be connected thereto. The external communication function may be infrared communication, Bluetooth, wireless/wired LAN, telephone communication, facsimile communication, cable connection or the like. In the present embodiment, a digital camera 102a and a scanner 102b can be connected to the IP telephone unit 101 a. To the IP telephone unit 101b, a television 102c, a printer 102d, and an audio device 102e can be connected. Some or all of the communication devices 102a through 102e may be connected to the Internet. The number of communication control devices 101 and the communication devices 102 is not limited to the number shown in the figure. Further, the communication devices may be in the same building with the communication control device, or may be in a different place or in a different building. For example, the communication control device may be the IP telephone unit at home and one of the communication devices may be a facsimile terminal at an office.

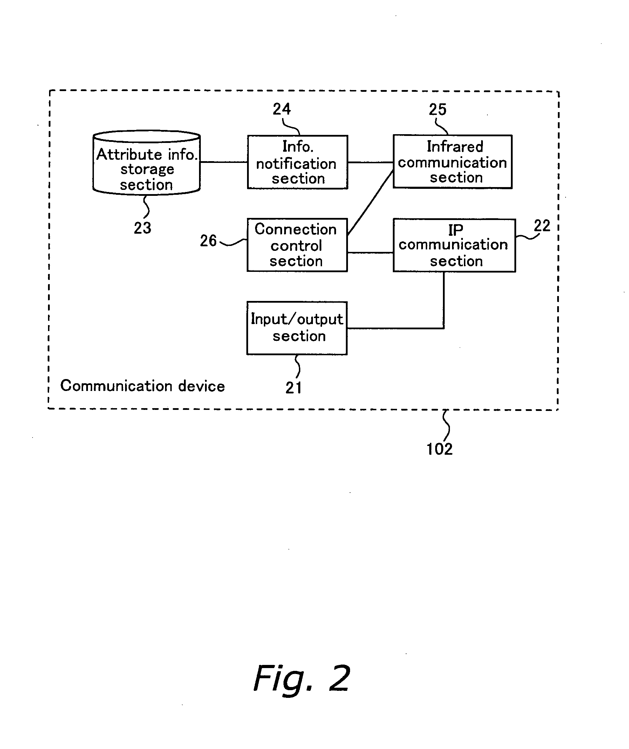

(2) Communication device
Figure 2 is a function block diagram showing the structure of the communication devices 102a through 102e according to the present embodiment. The communication device 102 has an input/output section 21, an IP communication section 22, an attribute information storage section 23, an information notification section 24, an external communication section 25 and a connection control section 26. Hereinafter, for the sake of simplifying the explanation, the communication devices 102a and 102b which can communicate with the communication control device 101a will be described unless otherwise specified. However, the same is also true of the functions of the communication devices 102c through 102e.

For example, if the communication device is a digital camera, the input section/output section 21 will perform the general functions of a digital camera, such as shooting still images and motion pictures. If the communication device is a television, the input section/output section 21 will perform the general functions of a television, such as receiving video/audio data and reproducing or outputting the data. If the communication device is a scanner, printer, or an audio device, the input section/output section 21 will perform the general functions of a scanner such as retrieving still image data, the general functions of a printer such as printing still image data, or general audio functions such as outputting audio data.

The IP communication section 22 establishes communication with other communication devices via the Internet or the like, and transmits and receives data input from the input section/output section 21. The IP communication section 22 may be formed of a standard device for connecting to the Internet, such as LAN adapter or the like, and/or software or hardware for processing a communication protocol commonly used on the Internet, such as TCP/IP.

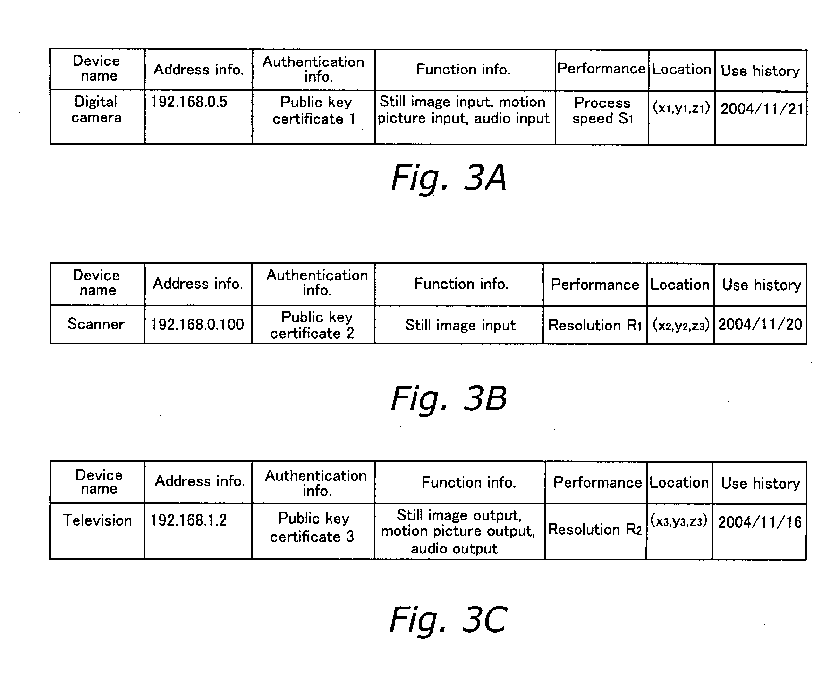

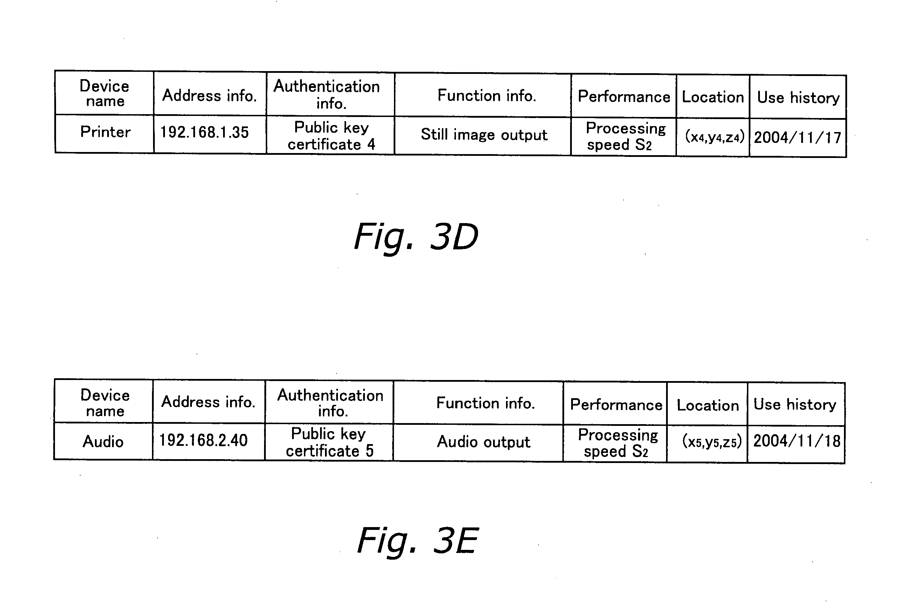

The attribute information storage section 23 stores information regarding the communication functions of the communication device. The attribute information storage section 23 is formed using a storage medium such as memory, hard discs, and the like. Examples of the attribute information include the device name, communication address, authentication information, function information, or the like. Figures 3A through 3E are diagrams schematically illustrating the attribute information stored in the attribute information storage section 23. In the present embodiment, the attribute information include the device name, address information, authentication information, function information, performance, location, and usage history. These are merely examples of the attribute information, and the attribute information is not limited to these examples.

The "device name" is information for users to identify the type of the device. The "address information" is information for identifying the communication device in order to establish communication by means of the external communication section 25. For example, an IP address and a facsimile number are some examples of address information. The "authentication information" is information for the communication device to authenticate itself in order to communication via the external communication section 25. A public key certificate is one example of the authentication information. The "function information" is information indicating the type of data which can be input/output. Examples of such information are information indicating whether it is an input device for still images or an output device for audio.

The "performance" indicates the level of each of the functions of the communication devices, and may include information on resolution, communication speed, the number of colors, the processing capability of the CPU, the communication protocols which can be interpreted, the data formats which can be interpreted, or the like. The "location" may be a GPS coordinates indicating the location of the communication device. The "usage history" may be the number of times the communication device has been used or the frequency of use. In this example, the latest date and time of use is used.

The information notification section 24 transmits information stored in the attribute information storage section 23 to the communication control device 101a via the external communication section 25.

The external communication section 25 communicates with the communication control device 101a by means of the external communication function. The external communication function may be infrared communication, Bluetooth, wireless/wired LAN, telephone communication, facsimile communication, cable communication, or the like.

The connection control section 26 receives attribute information for the communication devices 102c through 102e belonging to user B from the communication control device 101a via the external communication section 25. The connection control section 26 controls the IP communication section 22 or the external communication section 25 so as to establish communication with the communication devices 102c through 102e of user B.

More specifically, the connection control section 26 receives attribute information and connection control information of the communication devices 102c through 102e of user B from the communication control device 101a via the external communication section 25. Then, the connection control section 26 controls the IP communication section 22 based on this information, and establishes communication with the communication devices 102c through 102e belonging to user B. The connection control information includes information that requests a connection with another communication device, or information that waits for a request for connection to be received from another communication device. According to this information, the connection control section 26 will instruct the IP communication section 22 to request a connection with another communication device, or to wait for a connection request from another communication device.

After the connection control section 26 transmits or receives the connection request, it requests authentication information from the other connection device. By authenticating the authentication information it has received in response to the request, the connection control section 26 confirms whether the other communication device is of a correct type. When the other communication device requests authentication information, the connection control section 26 reads out the authentication information from the attribute information storage section 23 and transmits it. With the above-described procedure, the connection control section 26 controls the communication devices in order to establish communication therebetween.

The connection control section 26 may further authenticate the property information after authentication in order to determine the communication protocol or data format to be used during communication. Alternatively, means for confirming with a user whether or not to establish communication may be provided, and confirmation may be made before the connection is established. It is also possible to control the connection control section 26 in order to receive attribute information for a plurality of communication devices belonging to user B from the communication control device 101a, and to respectively establish communication with each of the plurality of communication devices.

The type of the communication device 102 is not limited to the examples shown in the present embodiment. Examples of other types of communication device 102 include personal computers, game players, video recorders, projectors, karaoke machines, intercoms, and the like. The communication device 102 may be any type of device as long as it has a function to transmit and receive data via a network.

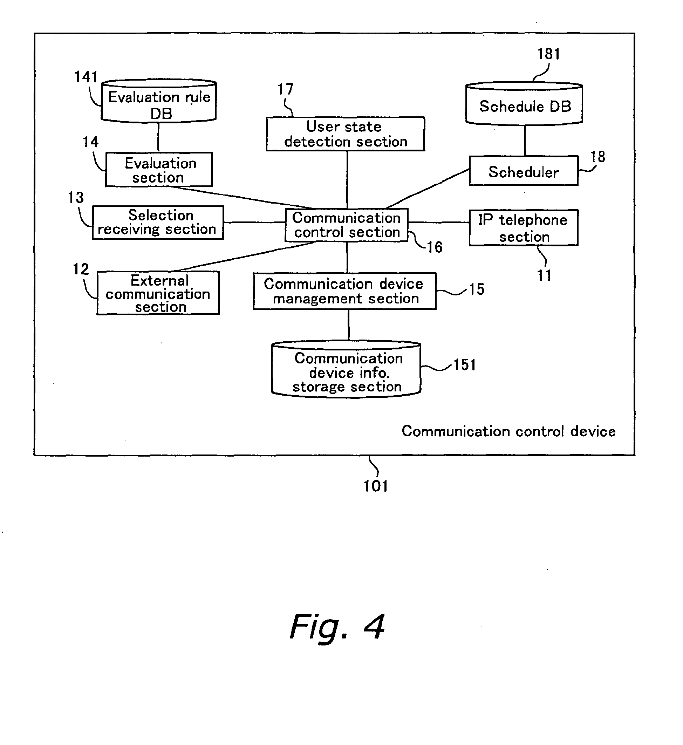

(3) Communication control device
Figure 4 is a block diagram showing a function structure of a communication control device according to the present embodiment. The communication control devices 101a and 101b have similar schematic structures. Thus, they are collectively described as the communication control device 101 herein. The communication control device 101 includes an IP telephone section 11, an external communication section 12, a selection receiving section 13, an evaluation section 14, a communication device management section 15, a communication control section 16, a user state detection section 17, and a scheduler 18.

(3-1) IP telephone section
The IP telephone section 11 performs the functions of a general IP telephone, and also transmits and receives data in accordance with instructions from the communication control section 16.. The IP telephone section 11 is an element for performing functions as an IP telephone, which is a telephone service utilizing an Internet protocol. Specifically, the IP telephone section 11 may be formed using a standard communication device for connecting to the Internet, such as a LAN adapter and software for performing IP telephone functions. The details of a method for performing IP telephony are described in references such as "Gekkan Opun Dezain (Monthly Open Design)", March 2003, CQ Publishing Co., Ltd., and the like.

Furthermore, the IP telephone section 11 transmits and receives control information received from the communication section 16 to and from another communication control device 101. This can be achieved by, for example, obtaining the address of another communication control device 101 to which a connection is to be made, and establishing communication in order to transmit and receive data to and from the address in addition to the audio telephone communication. Alternatively, a call control protocol such as the SIP protocol and the like used for controlling the connection and disconnection of an IP telephone may be used for transmitting and receiving the control information. If the SIP protocol is used, it is possible to transmit and receive the control information received from the communication section 16 by utilizing the INFO method for freely transmitting and receiving information in accordance with purpose of an application. The details of the SIP protocol are described in "IETF RFC3261" and the details of the INFO method are described in "IETF RFC2976". Protocols other than SIP protocol may also be used.

When the communication control device is applied to a device other than an IP telephone unit, the control information may be transmitted and received by superposing the information over audio information, or by utilizing a protocol for call control.

(3-2) External communication section
The external communication section 12 communicates with the communication device 102 with the external communication function. The external communication function may be, as described above, infrared communication, Bluetooth, wireless/wired LAN, telephone communication, facsimile communication, cable connection or the like.

(3-3) Selection receiving section
Based on the information from the communication control section 16, the selection receiving section 13 will output a screen that displays information about a plurality of communication devices 102 with which the communication control device 101 can communicate with by means of the external communication function, and will receive the selection of a communication device from the user. The selection receiving section 13 is formed of a display device and an input device which receives the selection by the user.

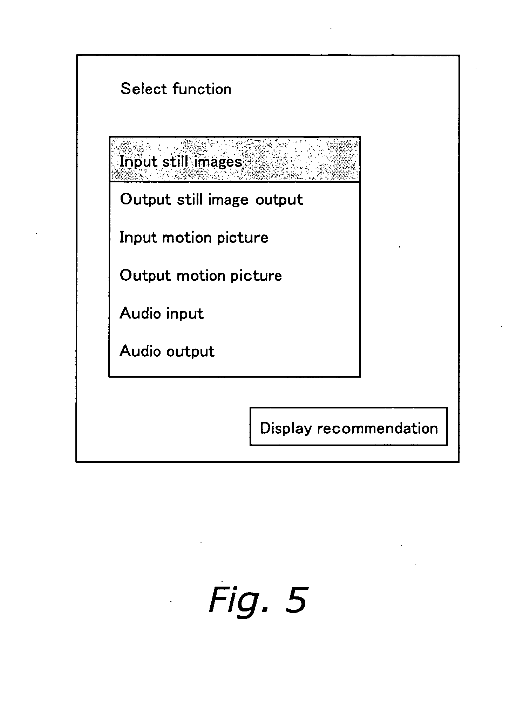

For example, the selection receiving section 13 may output a function selection screen as shown in Figure 5, and may receive a selection of the communication device 102 based on the function. The user can select the communication device based on the function which is desired. This is convenient because a communication suitable for the purpose can be readily started. It is also possible to have a structure in which, when a "display recommendation" button is pressed at the function selection screen shown in Figure 5, the communication device is automatically selected by the evaluation section 14 which will be described below.

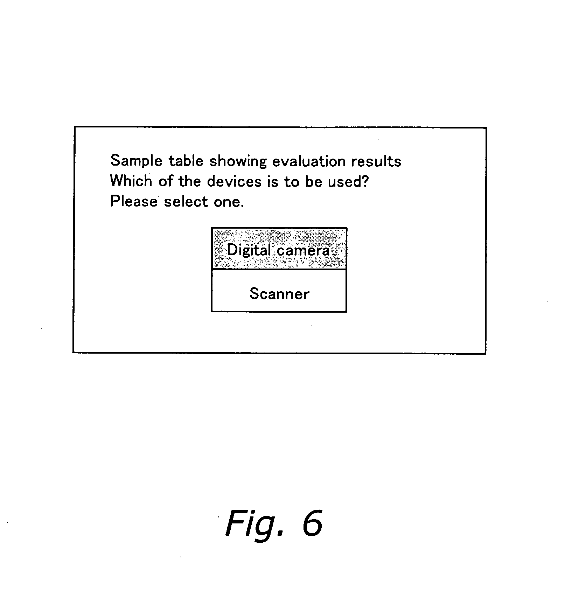

Alternatively, the selection receiving section 13 may obtain an evaluation result, which will be described below, from the evaluation section 14 and display it on the selection screen as shown in Figure 6, so as to have the user select one or a plurality of the communication devices.

(3-4) Evaluation section
The evaluation section 14 evaluates a plurality of communication devices with which the communication control device 101 communicates with by means of the external communication function, based on evaluation rules stored in an evaluation rule DB 141, and will extract at least one of them as a candidate. Hereinafter, for the sake of simplifying the description, the communication devices extracted by the communication control device 101a are referred to as candidates Ca and the communication devices extracted by the communication control device 101b are referred to as candidates Cb.

The evaluation section 14 may extract candidates from the stored communication devices based on some type of evaluation rules, or may receive a selection by the user. The evaluation rules may be, in descending order: 1) performance; 2) proximity to the user's current position; 3) proximity to the location where the user will move to; 4) the degree of matching with the user state; 5) the degree of matching with the functions; and 6) the most recent usage. To match to the user state means that, for example, a communication device which does not produce a sound is preferred while the user is traveling by train. Such evaluation rules are fractionalized and compiled into a database, or an evaluation function is used. In this way, the evaluation section 14 can calculate evaluation points based on a plurality of evaluation rules for each of the communication devices. The total evaluation points of each of the communication device may be the sum total of the evaluation points based on a plurality of evaluation rules.

The evaluation rules and attribute information of the communication devices stored in a communication device information storage section 151, which will be described below, are closely related to each other. For example, when the evaluation rule 1) described above is used, it is preferable that performance such as resolution and communication speed is included in the attribute information. Similarly, when each of the evaluation rules 2), 3), 4), 5) and 6) described above are used, it is preferable that location information by means of GPS or the like, function, usage history, and the like is included in the attribute information.

Further, in accordance with the evaluation rules to be applied, it is preferable to operate a scheduler, or a user state control device for managing the schedule of the user, with the communication control device. This allows the precise selection of candidates for the communication devices which are appropriate for the user based on various information.

(3-5) Communication device management section
The communication device management section 15 obtains the attribute information of the communication devices via the communication section 16 and the external communication section 12, and writes that information into the communication device information storage section 151. Alternatively, the communication device management section 15 may receive the attribute information in the communication device information storage section 15 from the user.

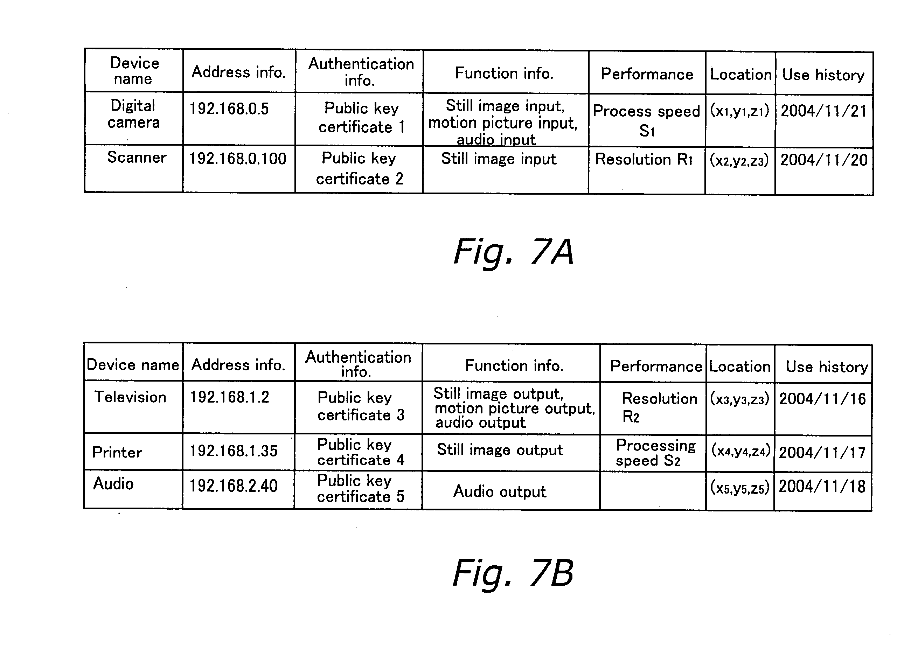

Figures 7A and 7B are diagrams schematically illustrating the attribute information stored in the communication device information storage section 151. Figure 7A is a diagram schematically illustrating the communication device information storage section 151 of the communication control device 101a connected to the digital camera 102a and the scanner 102b via the external communication section 12. Figure 7B is a diagram schematically illustrating the communication device information storage section 151 of the communication control device 101b connected to the television 102c, the printer 102d, and the audio 102e via the external communication section 12. The items of the attribute information are similar to the items of the attribute information of the communication devices.

The items of the attribute information conform to the evaluation rules to be applied. Specifically, when the evaluation rules as described above are used, performance such as resolution, communication speed, location information by means of GPS or the like, functions, and usage history are included in the attribute information.

(3-6) Communication control section
The communication control section 16 transmits attribute information regarding the candidates Ca for the communication device selected from the selection receiving section 13, and the total evaluation points of the candidates, to another communication control device 101b. The communication control section 16 receives the attribute information of the candidates Cb for the communication device, and the total evaluation points of the candidates from the other communication control section 101b.

Then, the communication control section 16 respectively calculates the sums of the total evaluation points of two candidates for all of the combinations of the candidates Ca and the candidates Cb, and transmits the results to the communication control device 101b. The communication control section 16 receives the calculation results by the communication control device 101b, and determines the best combination of communication devices based on the calculation results of both. In this way, the combination which is good for both of the users communicating with each other can be determined. Moreover, inconsistencies in the determinations among the communication devices can be avoided.

The communication control section 16 can notify the communication device 102 of a part or all of the attribute information of another communication device 102 and can control the establishment of communication. It is preferable that the attribute information to be notified is information necessary for at least establishing communication. Such attribute information may be, for example, a communication address, authentication information, performance, and the like.

(3-7) User state detection section
The user state detection section 17 detects and manages the state of the user operating the communication control device 101. The user state may be set by the user or may be detected automatically. The user state detection section 17 can be implemented by a client of an awareness system.

The user state detection section 17 is not an essential element of the communication control device 101. However, it is necessary when the user state is used in the evaluation rules.

(3-8) Scheduler
The scheduler 18 manages the schedule of the user stored in a schedule DB 181. Similarly to the user state detection section 17, the scheduler 18 is not an essential element of the communication control device 101, but is necessary when the schedule is used in the evaluation rules.

[Process]
Processes of the communication control devices can be grouped into processes by a requestor for communication and processes by a requestee. A communication device has functions to perform both types of processes. However, for the sake of simplifying the explanation, an example in which the communication control device 101a of user A performs processes of the requestor and the communication control device 101b of user B performs processes of the requestee will be described herein.

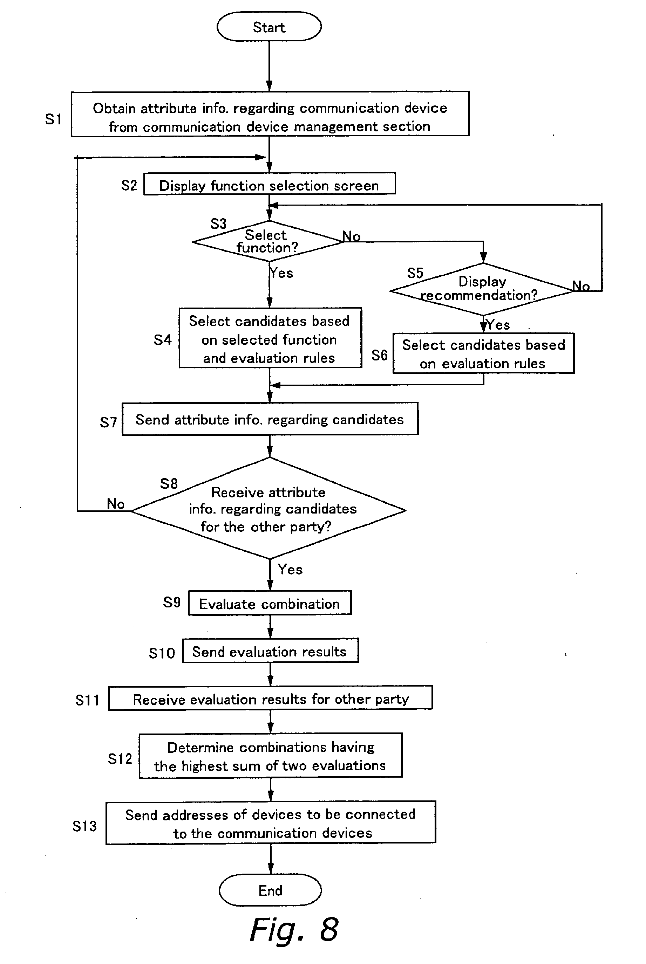

Processes by requestor
Figure 8 is a flow diagram showing an exemplary flow of a communication requesting process performed by the communication control device 101a. When an instruction which requests the start of communication different from the IP telephone communication which is currently being performed, the following process is started. In this example, when a button (not shown) for requesting the start of communication different from the IP telephone is pressed, the following process is started.

Step S1: The communication device management section 15 reads out the stored attribute information of the communication control devices 102a and 102b from the communication device information storage section 151, and passes it to the communication control section 16. The communication control section 16 produces a list of function information from the attribute information and passes it to the selection receiving section 13.

Steps S2 through S4: The selection receiving section 13 displays the function selection screen shown in Figure 5 (S2). The screen displays the list of function information received from the communication control section 16, and receives the selection of one of the functions. When a function is selected (S3), the communication control section 16 notifies the evaluation section 14 of the selected function. The evaluation section 14 extracts candidates for the communication devices from the communication device information storage section based on the selected function and the evaluation rules (S4). Alternatively, the selection receiving section 13 may display the selection screen of Figure 6, and may receive the selection of one or more communication devices which are desired to be used from the extracted candidates.

Steps S5 and S6: When none of the function is selected and the "display recommendation" button shown in Figure 5 is pressed (S5), the communication control section 16 instructs the evaluation section 14 to select one of the candidates. The evaluation section 14 calculates the total evaluation points for each of the communication devices based on the evaluation rules, and selects one or more candidates Ca for the communication device from the communication device attribute information storage section (S6). Again, the selection receiving section 13 may display the selection screen of Figure 6, and may receive the selection of one or more communication devices which are desired to be used from the extracted candidates.

Step S7: The communication control section 16 transmits the attribute information and the total evaluation points of the candidates Ca for the communication devices to the communication control device 101b. The attribute information preferably includes at least authentication information and function information since it is desired to guarantee the safety of communication and maintain coherence of the communication function.

Step S8: The communication control section 16 waits to receive the attribute information and the total evaluation points of the communication devices from the communication control device 101b. When it receives the attribute information and the total evaluation points, it notifies the evaluation section 14 and proceeds to step S9. The received attribute information and the total evaluation points are attribute information of one or more candidates Cb for the communication devices extracted by the communication control device 101b and the total evaluation points of the candidates.

Step S9: The evaluation section 14 calculates the sum of the total evaluation points for all of the combinations of its communication candidates Ca and the communication candidates Cb.

Steps S10 and S11: The communication control section 16 transmits the points for the combinations to the communication control device 101b (S10). In contrast, the communication control section 16 receives the points for the combinations calculated by the communication control section 16101b (S11). The order of steps S10 and S11 may be reversed. Step S11 may be performed at the same time as step S8.

Step S12: The communication control section 16 calculates the sums of the points of two devices for all of the combinations, and determines the combination which has the highest evaluation result. In this example, it is assumed that the combination of the scanner 102b of user A and the printer 102d of user B is determined to be the combination having the highest evaluation.

Step S13: The communication control section 16 notifies the communication device on its side that is specified in the determined combination, the scanner 102b in this example, of the attribute information for the communication device belonging to the other party, the printer 102d in this example, via the external communication section 12. Then, the scanner 102b requests a connection to the printer 102d based on the notified attribute information in order to establish the communication, and performs a process such as transmitting still images which have been input. The attribute information provided to the other communication device may be, for example, a communication address necessary for establishing communication, authentication information, performance, and the like. By transmitting the authentication information, it becomes possible to authenticate the other communication device when communication is established and to secure safe communication. By transmitting performances, it becomes possible for the communication device to convert its setting or required data so as to conform to the performance of the other communication device, and to connect itself to the other communication device. For example, the scanner 102b can set an appropriate resolution so as to match the printer resolution of the printer 102d, and can read the images at that resolution.

With the above-described process, the communication control device 101 a which requests communication can determine a combination having a high evaluation from amongst the combinations of the two groups of communication devices, and can control the start of the communication based on that determination.

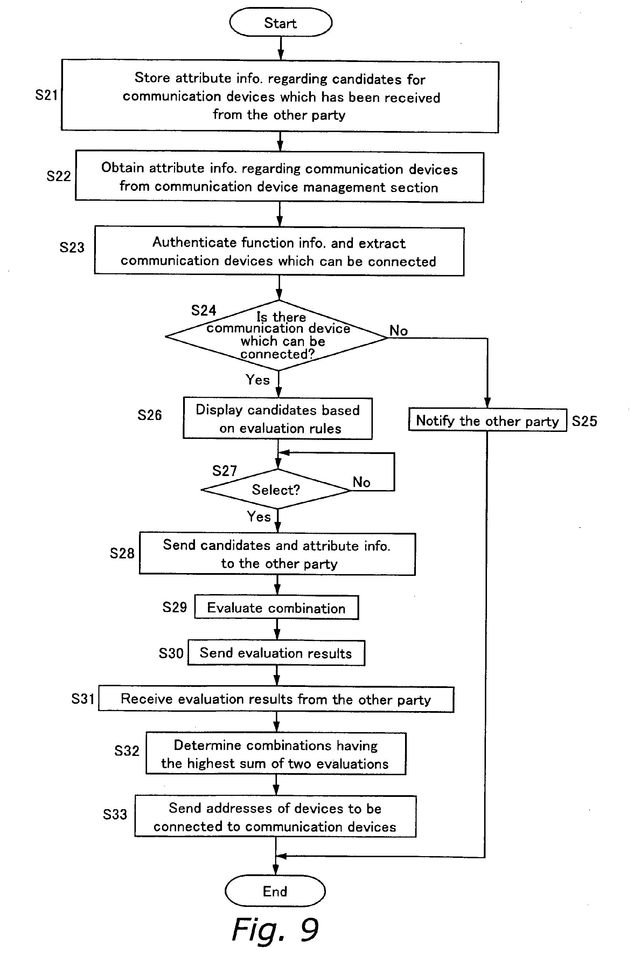

Processes of requestee
Figure 9 is a flow diagram showing an exemplary flow of the requestee processes performed by the communication control device 101b. When it receives the attribute information of the candidates for communication devices from the communication control device 101a during a conversation by IP telephone, the following process is started.

Step S21: When the communication control section 16 receives the attribute information of the candidates Ca for the communication devices of the communication control device 101a and the total evaluation points of the candidates via the IP telephone section 11, it temporarily stores the information and the points.

Step S22: The communication device management section 15 reads out the stored attribute information of the communication devices 102c, 102d, and 102e from the communication device information storage section 151 and passes it to the communication control section 16.

Steps S23 through S25: The communication control section 16 compares function information of the received attribute information of the candidates Ca and the attribute information which has been read out, and extracts the communication devices which can be connected to the communication devices included in the candidates Ca (S23). When there is no communication device which can be connected (S24), it notifies the communication control device 101a that communication is impossible (S25). When there is one or more communication device which can be connected, it notifies the evaluation section 14 of the communication device(s) and proceeds to step S26.

Steps S26 through S28: The evaluation section 14 evaluates the communication device(s) which can be connected based on the evaluation rules (S26), and displays the evaluation results by, for example, the screen of Figure 6, to receive selection of one or more candidates for the communication devices (S27). One or more selected communication devices are determined as the candidates Cb, and they are transmitted to the communication control device 101a with their attribute information and the total evaluation points (S28). Alternatively, the communication devices which can be connected and were extracted in Step S23 may be determined as the candidates Cb, and their attribute information and the total evaluation points may be transmitted. In such a case, steps S26 and S27 can be omitted.

Step S29: The evaluation section 14 calculates sums of the total evaluation points for all of the combinations of its communication candidates Cb and the communication candidates Ca.

Steps S30 and S31: The communication control section 16 transmits the obtained calculation results to the communication control device 101a (S30). In contrast, the communication control section 16 receives the calculation results for all of the combinations of the communication control section 16101a (S31). The order of steps S30 and S31 may be reversed. Step S30 may be performed at the same time as Step S28.

Step S32: The communication control section 16 calculates sums of the calculation results of two devices for all device combinations, and determines the combination which has the highest points. In this example, it is assumed that the combination of the printer 102d of user B and the scanner 102b of user A is determined as the combination having the highest evaluation.

Step S33: The communication control section 16 will transmit the attribute information of the other communication device, the scanner 102b in this example, to the communication device on its side specified by the determined combination, the printer 102d in this example, via the external communication section 12. The attribute information to be transmitted may be, for example, communication address required for establishing communication, authentication information, performance, and the like. It is not essential to transmit the communication address, but it is preferable to transmit because the communication addresses of both devices are required to establish a communication path in some cases. By transmitting the authentication information, it becomes possible to authenticate the other communication device when the communication is established and to secure safe communication. By transmitting performances, it becomes possible for the communication device to convert its setting or required data so as to conform to the performance of the other communication device, and to connect itself to the other communication device. For example, the printer 102d can set an appropriate printer resolution so as to match the resolution of the scanner 102b, and can output images at that resolution. Then, the printer 102d performs a process such as outputting still images received from the communication address provided.

With the above-described process, the communication control device which receives a request for communication can determine the combination having a high evaluation from amongst the combinations of two groups of communication devices, and can control the start of the communication based on the determination.

As described above, users in remote places who are communicating with one another can readily connect their communication devices without the need for cumbersome tasks such as inputting address information. Thus, it becomes possible to have more substantial and convenient communication by using communication functions. Further, it becomes possible to establish safe communication after authenticating each other using authentication information. It becomes also possible to easily select appropriate combinations from a plurality of communication devices and establish connection.

<Other embodiments>
In Embodiment 1, the function selection screen receives selection of one of the functions. However, the screen may receive selection of a plurality of functions. In such a case, the communication control section may select communication device(s) which have all of the plurality of functions which have been selected as candidates, or may select candidates separately for each of the functions.

When the candidates are selected for each of the functions, the communication control section may provide the candidates and their attribute information to the other communication control device 101b separately for each of the functions. Alternatively, the communication control section can receive the candidates for the communication devices of the communication control device 101b and their attribute information separately for each of the functions. In order to evaluate the combinations of the candidates for the communication devices and determine the combinations of the communication devices, similar processes as in Embodiment 1 can be performed separately for each of the functions.

(B) In Embodiment 1, the selection of the function is first received, and then the candidates for the communication devices are extracted based on the selected functions and the evaluation rules. However, the selection of the function is not essential. The candidates for the communication devices may be automatically extracted based on only the evaluation rules.

(C) In Embodiment 1, the optimal combinations selected by both of the communication control devices 101a and 101b are made to be the same. However, it is also possible that one of the communication control devices 101 determines the optimal process.

(D) The evaluation rules may vary for each of the communication devices or each of the users. For example, when the total evaluation points of the communication devices are calculated based on a plurality of evaluation rules, the evaluation rules are configurable by weighting the evaluation rules.

(E) In Embodiment 1, the communication device belonging to user A that requested communication other than IP telephony will request a connection to a communication device belonging to user B. However, the communication device belonging to user B may request connection to the communication device belonging to user A. As described above, which party will request the connection can be determined by the connection control section 26 of the connection device 102 based on connection control information. The communication control device 101 can transmit the connection control information instructing a connection request to the communication device when, for example, it receives a request for another communication from the user. It is preferable to set the connection control information as such, because this ensures that either one of the communication devices that communicate with one another issues a connection request. Thus, a situation in which both communication devices issue connection requests or both wait for a connection request can be avoided. Of course, the requesting communication control device 101 may transmit the connection control information an instruction to wait for the connection request to the communication device. The connection control information may be preset, or may be set by the user.

(F) Programs for executing the methods performed by the communication control device as described above and computer readable recording media storing such programs are included within the scope of the present invention. The recording media may be computer readable floppy discs, hard discs, semiconductor memories, CD-ROMs, DVDs, magneto-optical discs (MO), or the like.

INDUSTRIAL APPLICABILITY

The communication control device according to the present invention can easily connect communication devices of users in remote places who are communicating with one another, and is useful as a function implemented on home electrical devices having a network connection function.

## Claims

1. A communication control device for communicating with a communication device b1 with a first communication function and communicating with a communication device a2 with a second communication function, comprising:
a first attribute information storage unit for storing attribute information regarding a third communication function of the communication device a2;
an accepting unit for accepting a request for communication from a user by means of a communication device having a communication function other than the first communication function and the second communication function;
an attribute information transmission unit for transmitting attribute information regarding the communication device a2 stored in the first attribute information storage unit to the communication device b1 with the first communication function based on the request accepted by the accepting unit;
an attribute information receiving unit for receiving attribute information that includes at least a communication address for a communication device b2 having the third communication function from the communication device b 1 after the attribute information is transmitted by the attribute information transmission unit; and
a first attribute notifying unit for notifying the communication device a2 with the second communication function of the communication address obtained by the attribute information receiving unit.

2. A communication control device according to claim 1, further comprising a first attribute information obtaining unit for obtaining attribute information regarding the communication function other than the first communication function and the second communication function from at least one communication device with the second communication function, wherein:
the first attribute information storage unit stores the attribute information obtained by the first attribute information obtaining unit.

3. A communication control device according to claim 1, wherein the first attribute information storage unit stores attribute information regarding the communication function other than the first communication function and the second communication function for each of a plurality of communication devices, the device further comprising:
a first extraction unit for extracting at least one communication device including, the communication device a2, stored in the first attribute information storage unit as candidates based on the attribute information, and wherein
the attribute information transmission unit transmits attribute information regarding the candidates extracted by the first extraction unit to the communication device b1 with the first communication function.

4. A communication control device according to claim 3, wherein:
the attribute information stored in the first attribute information storage unit includes function information regarding the functions of the communication devices;
the accepting unit accepts designation of one of the functions stored in the first attribute information storage unit; and
the first extraction unit extracts the communication devices having the function accepted by the accepting unit as the candidates.

5. A communication control device according to claim 3, wherein the attribute information receiving unit receives attribute information for at least one communication device having the communication function other than the first communication function and the second communication function, including the communication device b2, from the communication device b1, the device further comprising:
a first determining unit for determining an optimal combination of the communication devices based on the attribute information of the candidates extracted by the first extraction unit and the attribute information received by the attribute information receiving unit, wherein
the first attribute notifying unit will provide a communication address in accordance with the determination by the first determining unit.

6. A communication control device according to claim 5, wherein the first determining unit evaluates all of the combinations of the candidates extracted by the first extraction unit and the communication devices received by the attribute information receiving unit, receives evaluation results at the communication device b1 from the communication device b1, and determines the optimal combination of communication devices based on sums of both evaluation results.

7. A communication control device for communicating with a communication device a1 with a first communication function, comprising:
a second attribute information storage unit for storing attribute information that includes at least a communication address for a third communication function of a communication device b2 different from the communication device a1;
a request receiving unit for receiving attribute information regarding a communication device a2 having the third communication function from the communication device a1; and
a response transmission unit for transmitting the attribute information that includes at least the communication address of the communication device b2 which is stored in the second attribute information storage unit to the communication device a1 with the first communication function, in response to the reception of the attribute information by the request receiving unit.

8. A communication control device according to claim 7, wherein the communication control device is connected to the third communication device b2 with the second communication function, and the communication control device further comprises:
a second attribute notifying unit for notifying the communication device b2 of a communication address of the communication device a2 which is received by the request receiving unit with the second communication function.

9. A communication control device according to claim 7, wherein the communication control device is connected to the third communication device b2 with the second communication function, the communication control device further comprising:
an attribute information obtaining unit for obtaining attribute information on the communication function other than the first communication function and the second communication function from at least one communication device with the second communication function, wherein
the second attribute information storage unit stores the attribute information obtained by the attribute information obtaining unit.

10. A communication control device according to claim 7, wherein:
the second attribute information storage unit stores attribute information on the communication function other than the first communication function and the second communication function for each of a plurality of communication devices; and
the request receiving unit receives attribute information regarding the communication function other than the first communication function and the second communication function for at least one communication device, including the communication device a2; and
the communication control device further comprising:
a second extraction unit for extracting at least one candidate for a communication device which has the communication function other than the first communication function and the second communication function, including the communication device b2, based on the attribute information of the communication device received by the request receiving unit, wherein
the response transmission unit transmits the attribute information of the candidates extracted by the second extraction unit to the communication device a1 with the first communication function.

11. A communication control device according to claim 10, further comprising a second determining unit for determining an optimal combination of the communication devices based on the attribute information of the candidates extracted by the second extraction unit and the attribute information of the communication devices received by the request receiving unit.

12. A communication control device according to claim 11, wherein the second determining unit evaluates all of the combinations of the candidates extracted by the second extraction unit and the communication devices received by the request receiving unit, receives evaluation results at the communication device a1 from the communication device a1, and determines the optimal combination of communication devices based on sums of both evaluation results.

13. A communication control method executed by a communication control device for communicating with a communication device b1 with a first communication function and communicating with a communication device a2 with a second communication function, comprising:
a first attribute information storing step that stores attribute information regarding a third communication function of the communication device a2;
an accepting step that accepts a request for communication from a user by means of a communication device having a communication function other than the first communication function and the second communication function;
an attribute information transmission step that transmits attribute information of the communication device a2 stored in the first attribute information storing step to the communication device b1 with the first communication function based on the request accepted in the accepting step;
an attribute information receiving step that receives attribute information that includes at least the communication address for a communication device b2 having the third communication function from the communication device b1, after the attribute information is transmitted in the attribute information transmission step; and
a first attribute notifying step that notifies the communication device a2 of the communication address obtained in the attribute information receiving step with the second communication function.

14. A communication control method executed by a communication control device for communicating with a communication device a1 with a first communication function, comprising:
a second attribute information storing step that stores attribute information that includes at least a communication address for a third communication function of a communication device b2 different from the communication device a1;
a request receiving step that receives attribute information regarding a communication device a2 having the third communication function from the communication device a1; and
a response transmission step that transmits the attribute information that includes at least the communication address of the communication device b2 which is stored in the second attribute information storing step to the communication device a1 with the first communication function, in response to reception of the attribute information in the request receiving step.
